# EUROPEAN PATENT APPLICATION

(11) **EP 4 686 594 A1**
(43) Date of publication of application: **04.02.2026**
(21) Application number: 25188541.4
(22) Date of filing: 09.07.2025
(51) Int. Cl.: B60K 35/235, B60K 35/81

(54) **SYSTEMS, APPARATUSES, METHODS, AND COMPUTER PROGRAM PRODUCTS FOR A PLURALITY OF STABILIZED VEHICLE INTERFACE COMPONENTS**

(30) Priority: 31.07.2024 IN 202411058019; 21.10.2024 US 202418921908
(71) Applicant: Honeywell International Inc., Charlotte, NC 28202 (US)
(72) Inventor: KHAN, Kalimulla, Charlotte, 28202 (US); LEIPHON, Kenneth M, Charlotte, 28202 (US); J, Kirupakar, Charlotte, 28202 (US); RAJENDRAN, Ramkumar, Charlotte, 28202 (US); KOSURI, Sri Harsha, Charlotte, 28202 (US); KAMATH, Mythili Belle, Charlotte, 28202 (US)
(74) Representative: Haseltine Lake Kempner LLP

(57) **Abstract**

Systems, apparatuses, methods, and computer program products are provided herein. For example, a method may include includes receiving, from a plurality of sensors of a vehicle, vehicle related motion data. In some embodiments, the method includes identifying vehicle display configuration data. In some embodiments, the method includes generating vehicle display stabilization data by applying the vehicle related motion data to a vehicle display stabilization model. In some embodiments, the method includes generating a plurality of stabilized vehicle interface components based on the vehicle display stabilization data, vehicle display data, and the vehicle display configuration data. In some embodiments, the method includes causing each of the plurality of stabilized vehicle interface components to be rendered to an interface of a corresponding display device.

## Description

### CROSS-REFERENCE TO RELATED APPLICATIONS

This application claims the benefit of U.S. Provisional Patent Application No. 63/593,860, filed October 27, 2023 and India Provisional Patent Application No. 202411058019, filed July 31, 2024, the entire contents of which are incorporated by reference herein.

### TECHNOLOGICAL FIELD

Embodiments of the present disclosure relate generally to systems, apparatuses, methods, and computer program products for a plurality of stabilized vehicle interface components.

### BACKGROUND

Applicant has identified many technical challenges and difficulties associated with a plurality of stabilized vehicle interface components. Through applied effort, ingenuity, and innovation, Applicant has solved problems related to a plurality of stabilized vehicle interface components by developing solutions embodied in the present disclosure, which are described in detail below.

### BRIEF SUMMARY

Various embodiments described herein relate to systems, apparatuses, methods, and computer program products for a plurality of stabilized vehicle interface components.

In accordance with one aspect of the disclosure, a method is provided. In some embodiments, the method includes receiving, from a plurality of sensors of a vehicle, vehicle related motion data. In some embodiments, the method includes identifying vehicle display configuration data. In some embodiments, the vehicle display configuration data is representative of a plurality of display configuration sets. In some embodiments, each of the plurality of display configuration sets is associated with a corresponding display device of a plurality of display devices of the vehicle. In some embodiments, the method includes generating vehicle display stabilization data by applying the vehicle related motion data to a vehicle display stabilization model. In some embodiments, the method includes generating a plurality of stabilized vehicle interface components based on the vehicle display stabilization data, vehicle display data, and the vehicle display configuration data. In some embodiments, each of the plurality of stabilized vehicle interface components is associated with a corresponding display device of the plurality of display devices of the vehicle. In some embodiments, the method includes causing each of the plurality of stabilized vehicle interface components to be rendered to an interface of a corresponding display device.

In some embodiments, the vehicle related motion data is received when the vehicle is in motion.

In some embodiments, the plurality of sensors includes at least one camera.

In some embodiments, the at least one camera is configured to capture vehicle related motion data associated with an eye gaze of an occupant of the vehicle.

In some embodiments, the at least one camera is positioned inside an interior area of the vehicle.

In some embodiments, the plurality of sensors includes at least one lidar device.

In some embodiments, the plurality of sensors includes at least one inertial measurement unit.

In some embodiments, each of the plurality of display devices is physically secured to the vehicle.

In some embodiments, each of the plurality of display configuration sets is representative of one or more of an orientation display configuration item, a layout display configuration item, or a dimension display configuration item.

In some embodiments, the method includes remapping one or more touch zones based on the vehicle display stabilization data.

In some embodiments, the method includes identifying the vehicle display data.

In some embodiments, the method includes generating a plurality of vehicle interface components based on the vehicle display data.

In some embodiments, each of the plurality of vehicle interface components is associated with a corresponding display device of the plurality of display devices of the vehicle.

In some embodiments, the method includes causing each of the plurality of vehicle interface components to be rendered to an interface of a corresponding display device.

In some embodiments, the vehicle related motion data is received in response to a vehicle instability event.

In some embodiments, each of the plurality of display devices is physically separate from each of the plurality of sensors.

In some embodiments, the plurality of sensors is associated with a first amount.

In some embodiments, the plurality of display devices is associated with a second amount.

In some embodiments, the first amount is less than the second amount.

In accordance with another aspect of the disclosure, an apparatus is provided. In some embodiments, the apparatus includes memory and one or more processors communicatively coupled to the memory. In some embodiments, the one or more processors are configured to receive, from a plurality of sensors of a vehicle, vehicle related motion data. In some embodiments, the one or more processors are configured to identify vehicle display configuration data. In some embodiments, the vehicle display configuration data is representative of a plurality of display configuration sets. In some embodiments, each of the plurality of display configuration sets is associated with a corresponding display device of a plurality of display devices of the vehicle. In some embodiments, the one or more processors are configured to generate vehicle display stabilization data by applying the vehicle related motion data to a vehicle display stabilization model. In some embodiments, the one or more processors are configured to generate a plurality of stabilized vehicle interface components based on the vehicle display stabilization data, vehicle display data, and the vehicle display configuration data. In some embodiments, each of the plurality of stabilized vehicle interface components is associated with a corresponding display device of the plurality of display devices of the vehicle. In some embodiments, the one or more processors are configured to cause each of the plurality of stabilized vehicle interface components to be rendered to an interface of a corresponding display device.

In some embodiments, each of the plurality of display configuration sets is representative of one or more of an orientation display configuration item, a layout display configuration item, or a dimension display configuration item.

In some embodiments, the one or more processors are configured to remapping one or more touch zones based on the vehicle display stabilization data.

In some embodiments, the one or more processors are configured to identify the vehicle display data.

In some embodiments, the one or more processors are configured to generate a plurality of vehicle interface components based on the vehicle display data.

In some embodiments, each of the plurality of vehicle interface components is associated with a corresponding display device of the plurality of display devices of the vehicle.

In some embodiments, the one or more processors are configured to cause each of the plurality of vehicle interface components to be rendered to an interface of a corresponding display device.

In some embodiments, the vehicle related motion data is received in response to a vehicle instability event.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for receiving, from a plurality of sensors of a vehicle, vehicle related motion data. In some embodiments, the computer program code, in execution with at least one processor, configures the computer program product for identifying vehicle display configuration data. In some embodiments, the vehicle display configuration data is representative of a plurality of display configuration sets. In some embodiments, each of the plurality of display configuration sets is associated with a corresponding display device of a plurality of display devices of the vehicle. In some embodiments, the computer program code, in execution with at least one processor, configures the computer program product for generating vehicle display stabilization data by applying the vehicle related motion data to a vehicle display stabilization model. In some embodiments, the computer program code, in execution with at least one processor, configures the computer program product for generating a plurality of stabilized vehicle interface components based on the vehicle display stabilization data, vehicle display data, and the vehicle display configuration data. In some embodiments, each of the plurality of stabilized vehicle interface components is associated with a corresponding display device of the plurality of display devices of the vehicle. In some embodiments, the computer program code, in execution with at least one processor, configures the computer program product for causing each of the plurality of stabilized vehicle interface components to be rendered to an interface of a corresponding display device.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an example block diagram of an environment in which embodiments of the present disclosure may operate;
FIG. 2 illustrates an example block diagram of an example apparatus that may be specially configured in accordance with one or more embodiments of the present disclosure;
FIG. 3 illustrates a plurality of interface components in accordance with one or more embodiments of the present disclosure;
FIG. 4 illustrates a plurality of interface components in accordance with one or more embodiments of the present disclosure;
FIG. 5 illustrates a flowchart of an example method in accordance with one or more embodiments of the present disclosure; and
FIG. 6 illustrates a flowchart of an example method in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein address technical problems associated with unstable vehicle interface components. As would be understood by one skilled in the field to which this disclosure pertains, there are numerous example scenarios in which vehicle interface components are desirable.

In many applications, it may be desirable to use a plurality of vehicle interface components. For example, it may be desirable to use a plurality of vehicle interface components associated with a plurality of display devices on a vehicle (e.g., display devices that are a component of the vehicle). In some implementations, it may be desirable to use a plurality of vehicle interface components to facilitate traveling from a first location to a second location using the vehicle (e.g., use vehicle interface components when the vehicle is in motion).

In some implementations, vehicle interface components may be impacted by a vehicle instability event. In some implementations, vehicle instability event may decrease the usefulness of vehicle interface components because a vehicle instability events may cause such vehicle interface components to become unstable (e.g., a vehicle interface component may shake and/or blur). For example, a vehicle instability event may cause vehicle interface components to become unstable such that information displayed on the vehicle interface component is not readable by an occupant of a vehicle (e.g., an operator of a vehicle, a passenger of a vehicle, etc.). As another example, a vehicle instability event may cause vehicle interface components to become unstable such that occupants of a vehicle are unable to use vehicle interface components while the vehicle is in motion (e.g., to facilitate traveling from a first location to a second location using the vehicle). As another example, a vehicle instability event may cause vehicle interface components to become unstable such that occupants of the vehicle are affected by motion sickness (e.g., due to the shaking and/or blurriness of the vehicle interface components). Accordingly, there is a need for systems, apparatuses, methods, and computer program products for generating a plurality of stabilized vehicle related interface even when vehicle interface components are impacted by a vehicle instability event.

Thus, to address these and/or other issues related to vehicle interface components, example systems, apparatuses, methods, and computer program products for generating a plurality of stabilized vehicle interface components are disclosed herein. For example, an embodiment in this disclosure, described in greater detail below, includes a method that includes receiving, from a plurality of sensors of a vehicle, vehicle related motion data. In some embodiments, the method includes identifying vehicle display configuration data. In some embodiments, the vehicle display configuration data is representative of a plurality of display configuration sets. In some embodiments, each of the plurality of display configuration sets is associated with a corresponding display device of a plurality of display devices of the vehicle. In some embodiments, the method includes generating vehicle display stabilization data by applying the vehicle related motion data to a vehicle display stabilization model. In some embodiments, the method includes generating a plurality of stabilized vehicle interface components based on the vehicle display stabilization data, vehicle display data, and the vehicle display configuration data. In some embodiments, each of the plurality of stabilized vehicle interface components is associated with a corresponding display device of the plurality of display devices of the vehicle. In some embodiments, the method includes causing each of the plurality of stabilized vehicle interface components to be rendered to an interface of a corresponding display device. Accordingly, the systems, apparatuses, methods, and computer program products for a plurality of stabilized vehicle interface components provided herein enable a plurality of stabilized vehicle interface components even when vehicle interface components are impacted by a vehicle instability event.

### Example Systems and Apparatuses

Embodiments of the present disclosure herein include systems, apparatuses, methods, and computer program products configured generate a plurality of stabilized vehicle interface components. It should be readily appreciated that the embodiments of the apparatus, systems, methods, and computer program product described herein may be configured in various additional and alternative manners in addition to those expressly described herein.

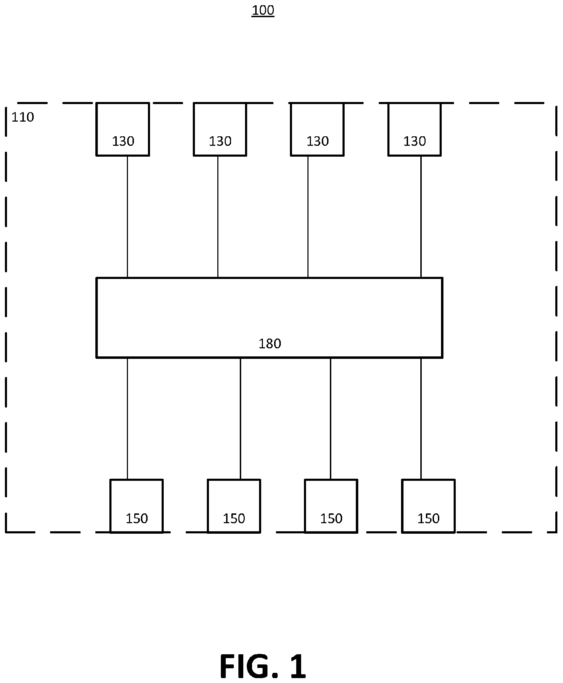

FIG. 1 illustrates an example block diagram of an environment 100 in which embodiments of the present disclosure may operate. Specifically, FIG. 1 illustrates a vehicle 110. In some embodiments, the vehicle 110 may describe any machine, robot, computing devices, and/or apparatus comprised of hardware, software, firmware, and/or any combination thereof, that maneuvers throughout an environment through any medium. In some contexts, a vehicle is utilized to transport objects, entities (e.g., people, animals, or other beings), or other onboard cargo. In some situations, a vehicle may be transporting no object except for the vehicle itself. Vehicles may be used for transportation on land, in water, in air, or across any other medium. Examples of vehicles include airplanes, helicopters, drones, cars, trucks, submarines, boats, and/or the like. Vehicles are not limited to the examples listed herein and may include any type of transportation device.

In some embodiments, the vehicle 110 is associated with a determinable location. The determinable location of the vehicle 110 in some embodiments represents an absolute position (e.g., GPS coordinates, latitude and longitude locations, an address, and/or the like) or a relative position of the vehicle 110 (e.g., an identifier representing the location of the vehicle 110 as compared to one or more other vehicles, one or more buildings (e.g., a destination of the vehicle 110), an enterprise headquarters, or general description in the world for example based at least in part on continent, state, ocean, or other definable region). In some embodiments, the vehicle 110 includes or otherwise is associated with a location sensor and/or software-driven location services that provide the location data corresponding to the vehicle 110. In other embodiments, the location of the vehicle 110 is stored and/or otherwise determinable to one or more systems.

In some embodiments, the environment 100 includes a plurality of sensors 130. In some embodiments, the plurality of sensors 130 are within the vehicle 110. In some embodiments, each of the plurality of sensors 130 is physically secured to the vehicle 110. In some embodiments, the plurality of sensors 130 are each configured to capture vehicle related motion data. In some embodiments, the plurality of sensors 130 is associated with a first amount. In some embodiments, the first amount may indicate a number of sensors in the plurality of sensors 130.

In some embodiments, the plurality of sensors 130 includes at least one lidar device. In this regard, for example, the at least one lidar device may be configured to capture vehicle related motion data. In some embodiments, the plurality of sensors 130 includes at least one inertial measurement unit. In this regard, for example, the at least one inertial measurement unit may be configured to capture vehicle related motion data. In some embodiments, the plurality of sensors 130 includes at least one accelerometer. In this regard, for example, the at least one accelerometer may be configured to capture vehicle related motion data. In some embodiments, the plurality of sensors 130 includes at least one gyroscope. In this regard, for example, the at least one gyroscope may be configured to capture vehicle related motion data. In some embodiments, the plurality of sensors 130 includes at least one radar (e.g., a millimeter wave-based radar) configured to capture vehicle related motion data. In some embodiments, the plurality of sensors 130 includes at least one global positioning system (GPS) configured to capture vehicle related motion data.

In some embodiments, the plurality of sensors 130 includes at least one camera. In some embodiments, the at least one camera is configured to capture data associated with an occupant of the vehicle 110 (e.g., a pilot, driver, passenger, etc.). In this regard, in some embodiments, the at least one camera is position inside an interior area of the vehicle 110. In some embodiments, the at least one camera is configured to capture vehicle related motion data associated with an eye gaze of an occupant of the vehicle 110. In this regard, in some embodiments, the at least one camera is configured to track a position change in an eye gaze of an occupant of the vehicle 110.

In some embodiments, the environment 100 includes a plurality of display devices 150. In some embodiments, each of the plurality of display devices 150 may be configured to display a corresponding stabilized vehicle interface component. In some embodiments, each of the plurality of display devices 150 is physically secured to the vehicle 110. In this regard, for example, each of the plurality of display devices 150 may be a component of the vehicle 110. In some embodiments, each of the plurality of display devices 150 is physically separate from each of the plurality of sensors 130. In this regard, for example, the plurality of sensors 130 may not be a component of the plurality of display devices 150. In some embodiments, the plurality of display devices 150 is associated with a second amount. In some embodiments, the second amount may indicate a number of display devices in the plurality of display devices 150. In some embodiments, the first amount may be less than the second amount. In this regard, in some embodiments, the number of sensors in the plurality of sensors 130 is less than the number of display devices in the plurality of display devices 150.

In some embodiments, the environment 100 includes a vehicle display stabilization device 180. In some embodiments, the vehicle display stabilization device 180 is electronically and/or communicatively coupled to the vehicle 110, the plurality of display devices 150, and/or the plurality of sensors 130. The vehicle display stabilization device 180 may be located within the vehicle 110. In some embodiments, the vehicle display stabilization device 180 is physically secured to the vehicle 110 (e.g., the vehicle display stabilization device 180 may be a component of the vehicle 110). In some embodiments, the vehicle display stabilization device 180 is configured via hardware, software, firmware, and/or a combination thereof, to perform data intake of one or more types of data, such as vehicle related motion data, vehicle display configuration data, vehicle display data, vehicle display stabilization data, and/or the like.

Additionally, or alternatively, in some embodiments, the vehicle display stabilization device 180 is configured via hardware, software, firmware, and/or a combination thereof, to generate and/or transmit command(s) that control, adjust, or otherwise impact operations of one or more of the vehicle 110, the vehicle display stabilization device 180, the plurality of display devices 150, and/or the plurality of sensors 130. For example, the vehicle display stabilization device 180 may be configured to generate a plurality of stabilized vehicle interface components. Additionally, or alternatively, in some embodiments, the vehicle display stabilization device 180 is configured via hardware, software, firmware, and/or a combination thereof, to perform data reporting, provide data, and/or other data output process(es) associated with monitoring or otherwise analyzing operations of one or more of the vehicle 110, the vehicle display stabilization device 180, the plurality of display devices 150, and/or the plurality of sensors 130. For example, in various embodiments, the vehicle display stabilization device 180 may be configured to execute and/or perform one or more operations and/or functions described herein.

Additionally, while FIG. 1 illustrates certain components as separate, standalone entities, various embodiments are not limited to this configuration. In other embodiments, one or more components may be directly connected and/or share hardware or the like.

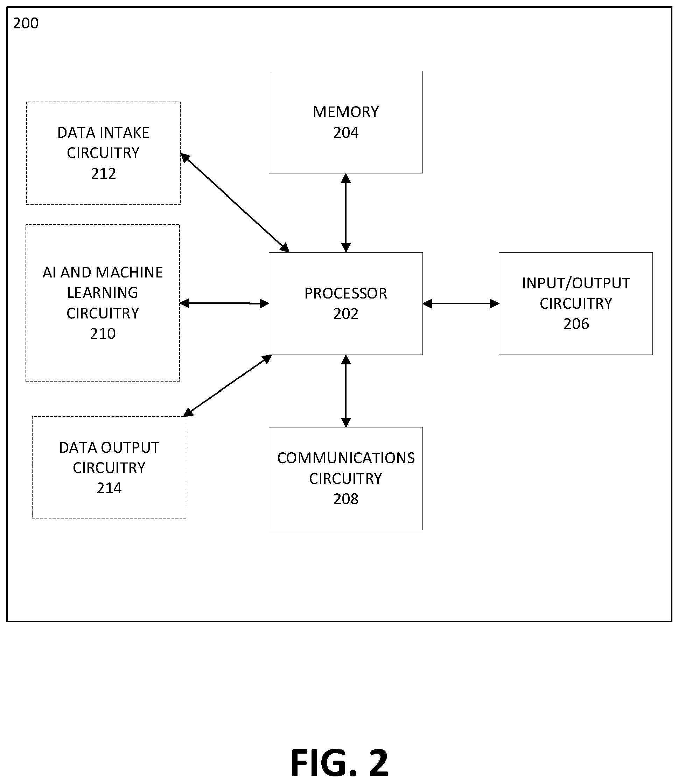

FIG. 2 illustrates an example block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, the vehicle display stabilization device 180, the plurality of display devices 150, and/or the plurality of sensors 130. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of the vehicle display stabilization device 180, the plurality of display devices 150, and/or the plurality of sensors 130 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the vehicle 110. In some embodiments, the data intake circuitry 212 includes hardware, software, firmware, and/or a combination thereof, that communicates with one or more sensor(s) component(s), and/or the like within the vehicle 110 to receive particular data associated with such operations of the vehicle 110. Additionally, or alternatively, in some embodiments, the data intake circuitry 212 includes hardware, software, firmware, and/or a combination thereof, that retrieves particular data associated with the vehicle 110 from one or more data repository/repositories accessible to the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect to the AI and machine learning circuitry 210.

In some embodiments, the vehicle display stabilization device 180 is configured to identify vehicle display data. In some embodiments, vehicle display data includes one or more items of data representative and/or indicative of a plurality of vehicle display items 304. In some embodiments, a display item is an item that is configured to be displayed on an interface component to convey and/or indicate information. For example, a display item may include images (e.g., still images), videos, synthetic images, virtual reality images, extended reality images, augmented reality images, and/or the like. In this regard, in some embodiments, a vehicle display item is a display item that is indicative of a speed associated with the vehicle 110. For example, a vehicle display item may be a display item that indicates a speed at which the vehicle 110 is moving. In some embodiments, a vehicle display item is a display item that is indicative of a fuel quantity associated with the vehicle 110. For example, a vehicle display item may be a display item that indicates an amount of fuel in the vehicle 110. In some embodiments, a vehicle display item is a display item that is indicative of engine parameters associated with the vehicle 110. For example, a vehicle display item may be a display item that indicates an engine temperature of an engine of the vehicle 110.

In some embodiments, a vehicle display item is a display item that is indicative of navigation maps associated with the vehicle 110. For example, a vehicle display item may be a display item that indicates a map of the area surrounding the vehicle 110. As another example, a vehicle display item may be a display item that indicates a flight path of the vehicle 110 (e.g., when the vehicle 110 is an aircraft). In some embodiments, a vehicle display item is a display item that is indicative of audio controls associated with the vehicle 110. For example, a vehicle display item may be a display item that may be used to adjust an audio volume in the vehicle 110. In some embodiments, a vehicle display item is a display item that is indicative of display controls associated with the vehicle 110. For example, a vehicle display item may be a display item that may be used to adjust a brightness of a display device in the vehicle 110. In some embodiments, a vehicle display item is a display item that is indicative of turbulence associated with the vehicle 110. For example, a vehicle display item may be a display item that indicates current and/or predicted turbulence associated with the vehicle 110 (e.g., when the vehicle 110 is an aircraft). In some embodiments, a vehicle display item is a display item that is indicative of weather associated with the vehicle 110. For example, a vehicle display item may be a display item that indicates severe weather in an area surrounding the vehicle 110. In some embodiments, the plurality of vehicle display items 304 is associated with a plurality of vehicle interface components 302. In some embodiments, a first portion of the plurality of vehicle display items 304A is associated with a first vehicle interface component 302A of the plurality of vehicle interface components 302. In some embodiments, a second portion of the plurality of vehicle display items 304B is associated with a second vehicle interface component 302B of the plurality of vehicle interface components 302. In some embodiments, a third portion of the plurality of vehicle display items 304C is associated with a third vehicle interface component 302C of the plurality of vehicle interface components 302. Said differently, for example, the plurality of vehicle display items 304 may be configured such that a portion of the plurality of vehicle display items 304 may be displayed on one of the plurality of vehicle interface components 302.

In some embodiments, the vehicle display stabilization device 180 is configured to generate the plurality of vehicle interface components 302. In some embodiments, the plurality of vehicle interface components 302 is generated based on vehicle display data. In this regard, in some embodiments, each of the plurality of vehicle interface components 302 includes at least one of the plurality of vehicle display items 304 (e.g., at least one of the plurality of vehicle display items 304 is included on each of the plurality of vehicle interface components 302).

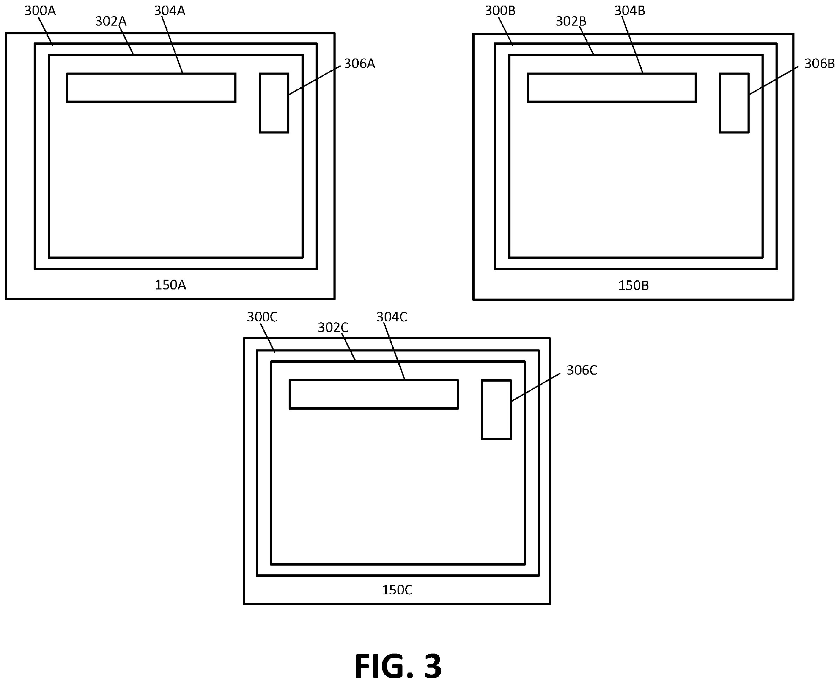

In some embodiments, each of the plurality of vehicle display items 304 is associated with an original display item position on one of the plurality of vehicle interface components 302. In this regard, for example, an original display item position may be a position on each of the plurality of vehicle interface components 302 at which a vehicle related device display item is displayed and/or located. For example, the first portion of the plurality of vehicle display items 304A may be associated with a first original display item position on the first vehicle interface component 302A. As another example, the second portion of the plurality of vehicle display items 304A may be associated with a second original display item position on the second vehicle interface component 302B. As another example, the third portion of the plurality of vehicle display items 304C may be associated with a third original display item position on the third vehicle interface component 302C. Although FIG. 3 illustrates three vehicle interface components in the plurality of vehicle interface components 302, it would be understood by one skilled in the field to which this disclosure pertains that the plurality of vehicle interface components 302 may include more or less vehicle interface components. For example, the plurality of vehicle interface components 302 may include four or two vehicle interface components.

In some embodiments, each of the plurality of vehicle interface components 302 includes one or more touch zones 306. For example, the first vehicle interface component 302A may include one or more first touch zones 306A. As another example, the second vehicle interface component 302B may include one or more second touch zones 306B. As another example, the third vehicle interface component 302C may include one or more third touch zones 306C. In some embodiments, each of the one or more touch zones 306 are selectable portions of the plurality of vehicle interface components 302. For example, the one or more touch zones 306 may be selectable to display information about a vehicle display item. As another example, the one or more touch zones 306 may be selectable to control one or more functions of the vehicle 110.

In some embodiments, each of the one or more touch zones 306 is associated with an original touch zone position on one of the plurality of vehicle interface components 302. In this regard, for example, an original touch zone position may be a position on each of the plurality of vehicle interface components 302 at which a touch zone is displayed and/or located on each of the plurality of vehicle interface components 302. For example, the one or more first touch zones 306A may be associated with a first original touch zone position on the first vehicle interface component 302A. As another example, the one or more second touch zones 306B may be associated with a second original touch zone position on the second vehicle interface component 302B. As another example, the one or more third touch zones 306C may be associated with a third original touch zone position on the third vehicle interface component 302C.

In some embodiments, the vehicle display stabilization device 180 is configured to cause each of the plurality of vehicle interface components 302 to be rendered to one of a plurality of interfaces 300, such as illustrated in FIG. 3. For example, the vehicle display stabilization device 180 may be configured to cause the first vehicle interface component 302A to be rendered to a first interface 300A. As another example, the vehicle display stabilization device 180 may be configured to cause the second vehicle interface component 302B to be rendered to a second interface 300B. As another example, the vehicle display stabilization device 180 may be configured to cause the third vehicle interface component 302C to be rendered to a third interface 300C.

In some embodiments, each of the plurality of interfaces 300 may be provided on one of the plurality of display devices 150. For example, the first interface 300A may be provided on a first display device 150A of the plurality of display devices 150. As another example, the second interface 300B may be provided on a second display device 150B of the plurality of display devices 150. As another example, the third interface 300C may be provided on a third display device 150C of the plurality of display devices 150.

In some embodiments, the vehicle display stabilization device 180 is configured to receive vehicle related motion data. In some embodiments, the vehicle display stabilization device 180 is configured to receive vehicle related motion data in response to a vehicle instability event. In some embodiments, vehicle related motion data includes one or more items of data representative and/or indicative of motion of the vehicle. In this regard, in some embodiments, vehicle related motion data includes one or more items of data representative and/or indicative of acceleration motion (e.g., motion in an X, Y, and/or Z axis) of the vehicle 110. In some embodiments, acceleration motion (e.g., motion in an X, Y, and/or Z axis) of the vehicle 110 is caused by a vehicle instability event. Additionally, or alternatively, vehicle related motion data includes one or more items of data representative and/or indicative of angular motion (e.g., azimuth, elevation, and/or roll motion) of the vehicle 110. In some embodiments, angular motion (e.g., azimuth, elevation, and/or roll motion) of the vehicle 110 is caused by a vehicle instability event.

Additionally, or alternatively, vehicle related motion data includes one or more items of data representative of motion of an eye gaze of an occupant of the vehicle 110. In this regard, in some embodiments, vehicle related motion data includes one or more items of data representative and/or indicative of acceleration motion (e.g., motion in an X, Y, and/or Z axis) of an eye gaze of an occupant of the vehicle 110. In some embodiments, acceleration motion (e.g., motion in an X, Y, and/or Z axis) of an eye gaze of an occupant of the vehicle 110 is caused by a vehicle instability event. Additionally, or alternatively, vehicle related motion data includes one or more items of data representative and/or indicative of angular motion (e.g., azimuth, elevation, and/or roll motion) of an eye gaze of an occupant of the vehicle 110. In some embodiments, angular motion (e.g., azimuth, elevation, and/or roll motion) of an eye gaze of an occupant of the vehicle 110 is caused by a vehicle instability event.

In some embodiments, a vehicle instability event is an event in which motion of the vehicle 110 causes acceleration motion (e.g., motion in an X, Y, and/or Z axis) and/or angular motion (e.g., azimuth, elevation, and/or roll motion) of the vehicle 110, an occupant of the vehicle 110 (e.g., the eyes of an occupant of the vehicle 110), and/or the plurality of display devices 150. For example, a vehicle instability event may be an event that includes driving over a road that causes acceleration motion and/or angular motion of the vehicle 110, an occupant of the vehicle 110 (e.g., the eyes of an occupant of the vehicle 110), and/or plurality of display devices 150. As another example, a vehicle instability event may be an event that includes encountering turbulence (e.g., when the vehicle 110 is an aircraft) that causes acceleration motion and/or angular motion of the vehicle 110, an occupant of the vehicle 110 (e.g., the eyes of an occupant of the vehicle 110), and/or plurality of display devices 150.

In some embodiments, the vehicle display stabilization device 180 is configured to receive vehicle related motion data from the plurality of sensors 130. In this regard, in some embodiments, each of the plurality of sensors 130 is configured to capture vehicle related motion data. For example, at least one camera component of the plurality of sensors 130 may be configured to capture vehicle related motion data that is associated with an eye gaze of an occupant of the vehicle 110 (e.g., acceleration motion and/or angular motion associated with an eye gaze of an occupant of the vehicle 110). As another example, a lidar component of the plurality of sensors 130 may be configured to capture vehicle related motion data that is associated with an eye gaze of an occupant of the vehicle 110. As another example, an inertial measurement unit of the plurality of sensors 130 may be configured to capture vehicle related motion data that is associated with motion of the vehicle 110 (e.g., may be configured to capture vehicle related motion data that is associated the vehicle 110). In some embodiments, the vehicle display stabilization device 180 is configured to correct for any drift associated with an inertial measurement unit. In some embodiments, the vehicle display stabilization device 180 is configured to receive vehicle related motion data from the plurality of sensors 130 when the vehicle is in motion (e.g., when the vehicle 110 is travelling from a first location to a second location).

In some embodiments, the vehicle display stabilization device 180 is configured to identify vehicle display configuration data. In some embodiments, vehicle display configuration data includes one or more items of data representative and/or indicative of a plurality of display configuration sets. In some embodiments, each of the plurality of display configuration sets is associated with a corresponding display device of the plurality of display devices 150. For example, a first display configuration set of the plurality of display configuration sets may be associated with the first display device 150A of the plurality of display devices 150. As another example, a second display configuration set of the plurality of display configuration sets may be associated with the second display device 150B of the plurality of display devices 150. As another example, a third display configuration set of the plurality of display configuration sets may be associated with the third display device 150C of the plurality of display devices 150.

In some embodiments, a display configuration set includes an orientation display configuration item. In some embodiments, an orientation display configuration item indicates that a corresponding display device of the plurality of display devices 150 is configured such that an interface component and/or interface provided on the corresponding display device is configured in a particular orientation (e.g., landscape, portrait, etc.). For example, when the first display configuration set includes an orientation display configuration item, the first display device 150A may be configured such that the first vehicle interface component 302A and/or the first interface 300A are provided on the first display device 150A in a particular orientation (e.g., landscape, portrait, etc.).

In some embodiments, a display configuration set includes a layout display configuration item. In some embodiments, a layout display configuration item indicates that a corresponding display device of the plurality of display devices 150 is configured such that an interface component and/or interface provided on the corresponding display device is configured in accordance with a particular layout (e.g., vehicle display items are configured on the interface component and/or interface in accordance with a particular layout). For example, when the second display configuration set includes a layout display configuration item, the second display device 150B may be configured such that the second vehicle interface component 302B and/or the second interface 300B are provided on the second display device 150B in a particular layout (e.g., a second portion of the plurality of vehicle display items 304B are configured on the second vehicle interface component 302B and/or the second interface 300B in accordance with a particular layout).

In some embodiments, a display configuration set includes a dimension display configuration item. In some embodiments, a dimension display configuration item indicates that a corresponding display device of the plurality of display devices 150 is configured such that an interface component and/or interface provided on the corresponding display device is configured in accordance with a particular dimension (e.g., vehicle display items are configured on the interface component and/or interface in accordance with a particular dimension). For example, when the third display configuration set includes a dimension display configuration item, the third display device 150C may be configured such that the third vehicle interface component 302C and/or the third interface 300C are provided on the third display device 150C in a particular dimension (e.g., a third portion of the plurality of vehicle display items 304C are configured on the third vehicle interface component 302C and/or the third interface 300C in accordance with a particular dimension).

In some embodiments, the vehicle display stabilization device 180 is configured to generate vehicle display stabilization data. In some embodiments, vehicle display stabilization data includes one or more items of data representative and/or indicative of an estimated position change of an eye gaze of an occupant of the vehicle 110 due to a vehicle instability event. Additionally, or alternatively, vehicle display stabilization data includes one or more items of data representative and/or indicative of an estimated position change of one or more of the plurality of display devices 150 due to a vehicle instability event.

In some embodiments, the vehicle display stabilization device 180 is configured to generate vehicle display stabilization data by applying vehicle related motion data to a vehicle display stabilization model. In some embodiments, a vehicle display stabilization model is a data entity that describes parameters, hyper-parameters, and/or defined operations of a rules-based and/or machine learning model that is configured to generate vehicle display stabilization data. In some embodiments, the vehicle display stabilization model includes a vestibulo-ocular reflex (VOR) model. In this regard, in some embodiments, the vehicle display stabilization model is configured to determine an estimated position change of an eye gaze of an occupant of the vehicle 110 due to a vehicle instability event by using vehicle related motion data. Additionally, or alternatively, the vehicle display stabilization model is configured to determine an estimated position change of one or more of the plurality of display devices 150 due to a vehicle instability event.

In some embodiments, the vehicle display stabilization device 180 is configured to generate a plurality of stabilized vehicle interface components 400. For example, the vehicle display stabilization device 180 may be configured to generate a first stabilized vehicle interface component 400A. As another example, the vehicle display stabilization device 180 may be configured to generate a second stabilized vehicle interface component 400B. As another example, the vehicle display stabilization device 180 may be configured to generate a third stabilized vehicle interface component 400C.

In some embodiments, the plurality of stabilized vehicle interface components 400 is generated based on vehicle display stabilization data and/or vehicle display data. In this regard, in some embodiments, each of the plurality of stabilized vehicle interface components 400 includes at least a portion of a plurality of stabilized vehicle display items 404 that correspond to the plurality of vehicle display items 304. For example, the first stabilized vehicle interface component 400A may include a first portion of the plurality of stabilized vehicle display items 404A that correspond to the first portion of the plurality of vehicle display items 304A. As another example, the second stabilized vehicle interface component 400B may include a second portion of the plurality of stabilized vehicle display items 404B that correspond to the second portion of the plurality of vehicle display items 304B. As another example, the third stabilized vehicle interface component 400C may include a third portion of the plurality of stabilized vehicle display items 404C that correspond to the third portion of the plurality of vehicle display items 304C.

Additionally, or alternatively, the plurality of stabilized vehicle interface components 400 is generated based on vehicle display configuration data. In this regard, in some embodiments, each of the plurality of stabilized vehicle interface components 400 may be generated in accordance with an orientation display configuration item. For example, the first stabilized vehicle interface component 400A may be generated such that it is in accordance with an orientation display configuration item associated with the first display device 150A. In some embodiments, each of the plurality of stabilized vehicle interface components 400 may be generated in accordance with a layout display configuration item. For example, the second stabilized vehicle interface component 400B may be generated such that it is in accordance with a layout display configuration item associated with the second display device 150B. In some embodiments, each of the plurality of stabilized vehicle interface components 400 may be generated in accordance with a dimension display configuration item. For example, the third stabilized vehicle interface component 400C may be generated such that it is in accordance with a dimension display configuration item associated with the third display device 150C.

In some embodiments, each of the plurality of stabilized vehicle display items 404 is associated with a stabilized display item position on one of the plurality of stabilized vehicle interface components 400. In this regard, for example, a stabilized display item position may be a position on one of the plurality of stabilized vehicle interface components 400 at which a stabilized vehicle related device display item is displayed and/or located. For example, the first portion of the plurality of stabilized vehicle display items 404A may be associated with a first stabilized display item position on the first stabilized vehicle interface component 400A. As another example, the second portion of the plurality of stabilized vehicle display items 404B may be associated with a second stabilized display item position on the second stabilized vehicle interface component 400B. As another example, the third portion of the plurality of stabilized vehicle display items 404C may be associated with a third stabilized display item position on the third stabilized vehicle interface component 400C. In some embodiments, a stabilized display item position may be a different position that an original display item position. Said differently, in some embodiments, each of the plurality of stabilized vehicle interface components 400 is configured such that an estimated position change of an eye gaze of an occupant of the vehicle 110 and/or an estimated position change of the plurality of display devices 150 due to a vehicle instability event is accounted for when displaying display items.

In some embodiments, each of the plurality of stabilized vehicle interface components 400 includes one or more remapped touch zones 406. For example, the first stabilized vehicle interface component 400A may include one or more first remapped touch zones 406A. As another example, the second stabilized vehicle interface component 400B may include one or more second remapped touch zones 406B. As another example, the third stabilized vehicle interface component 400C may include one or more third remapped touch zones 406C. In this regard, in some embodiments, the vehicle display stabilization device 180 is configured to remap the one or more touch zones 306 based on the vehicle display stabilization data. In some embodiments, each of the one or more remapped touch zones 406 are selectable portions of the plurality of stabilized vehicle interface components 400. For example, the one or more remapped touch zones 406 may be selectable to display information about a vehicle display item.

In some embodiments, each of the one or more remapped touch zones 406 is associated with a remapped touch zone position on one of the plurality of stabilized vehicle interface components 400. In this regard, for example, a remapped touch zone position may be a position on one of the plurality of stabilized vehicle interface components 400 at which a remapped touch zone is displayed and/or located. For example, the one or more first remapped touch zones 406A may be associated with a first remapped touch zone position on the first stabilized vehicle interface component 400A. As another example, the one or more second remapped touch zones 406B may be associated with a second remapped touch zone position on the second stabilized vehicle interface component 400B. As another example, the one or more third remapped touch zones 406C may be associated with a third remapped touch zone position on the third stabilized vehicle interface component 400C.

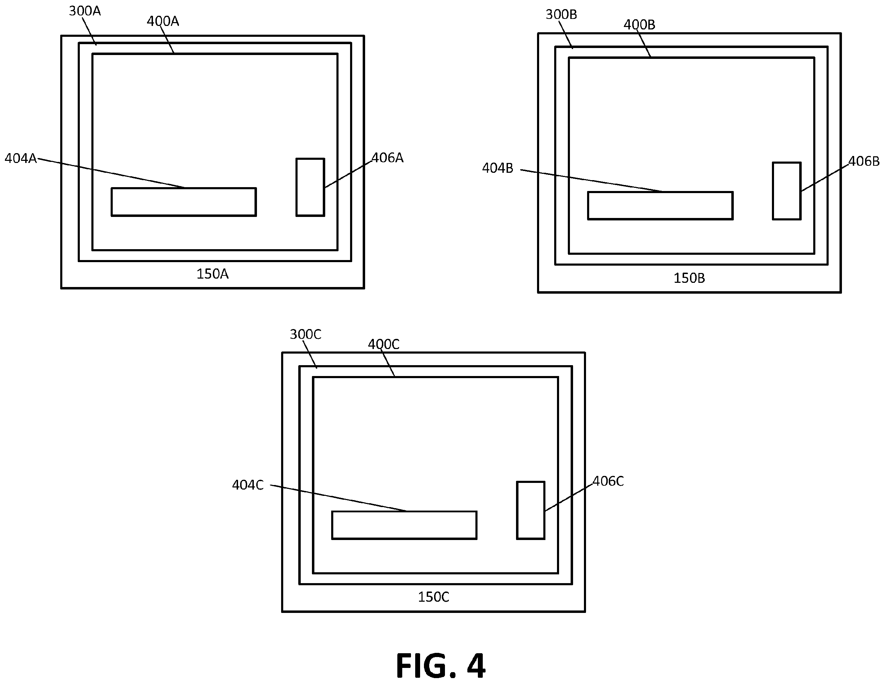

In some embodiments, the vehicle display stabilization device 180 is configured to cause each of the plurality of stabilized vehicle interface components 400 to be rendered to one of the plurality of interfaces 300, such as illustrated in FIG. 4. For example, the vehicle display stabilization device 180 may be configured to cause the first stabilized vehicle interface component 400A to be rendered to a first interface 300A. As another example, the vehicle display stabilization device 180 may be configured to cause the second stabilized vehicle interface component 400B to be rendered to a second interface 300B. As another example, the vehicle display stabilization device 180 may be configured to cause the third stabilized vehicle interface component 400C to be rendered to a third interface 300C.

### Example Methods

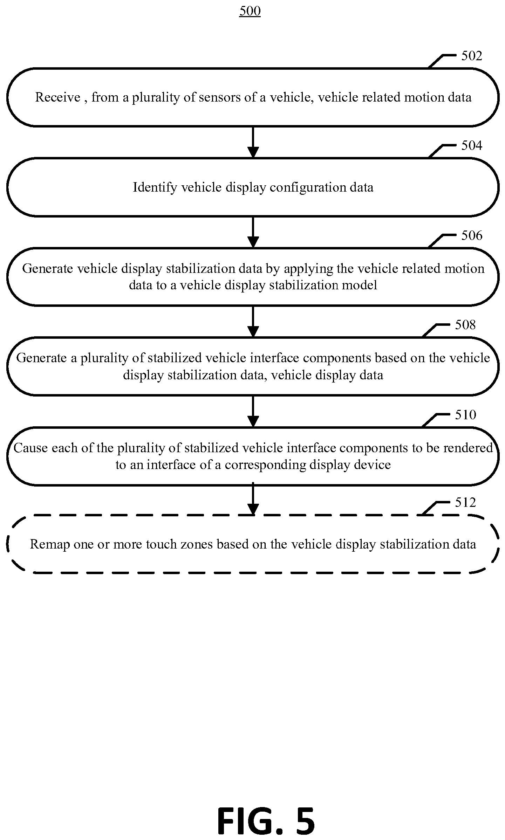

Referring now to FIG. 5, a flowchart providing an example method 500 is illustrated. In this regard, FIG. 5 illustrates operations that may be performed by the vehicle display stabilization device 180. In some embodiments, the method 500 includes operations for generating a plurality of stabilized vehicle interface components, as described above. In some embodiments, the example method 500 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 500.

As the method 500 includes receiving, from a plurality of sensors of a vehicle. As described above, in some embodiments, the vehicle display stabilization device is configured to receive vehicle related motion data in response to a vehicle instability event. In some embodiments, vehicle related motion data includes one or more items of data representative and/or indicative of motion of the vehicle. In this regard, in some embodiments, vehicle related motion data includes one or more items of data representative and/or indicative of acceleration motion (e.g., motion in an X, Y, and/or Z axis) of the vehicle. In some embodiments, acceleration motion (e.g., motion in an X, Y, and/or Z axis) of the vehicle is caused by a vehicle instability event. Additionally, or alternatively, vehicle related motion data includes one or more items of data representative and/or indicative of angular motion (e.g., azimuth, elevation, and/or roll motion) of the vehicle. In some embodiments, angular motion (e.g., azimuth, elevation, and/or roll motion) of the vehicle is caused by a vehicle instability event.

Additionally, or alternatively, vehicle related motion data includes one or more items of data representative of motion of an eye gaze of an occupant of the vehicle. In this regard, in some embodiments, vehicle related motion data includes one or more items of data representative and/or indicative of acceleration motion (e.g., motion in an X, Y, and/or Z axis) of an eye gaze of an occupant of the vehicle. In some embodiments, acceleration motion (e.g., motion in an X, Y, and/or Z axis) of an eye gaze of an occupant of the vehicle is caused by a vehicle instability event. Additionally, or alternatively, vehicle related motion data includes one or more items of data representative and/or indicative of angular motion (e.g., azimuth, elevation, and/or roll motion) of an eye gaze of an occupant of the vehicle. In some embodiments, angular motion (e.g., azimuth, elevation, and/or roll motion) of an eye gaze of an occupant of the vehicle is caused by a vehicle instability event.

In some embodiments, a vehicle instability event is an event in which motion of the vehicle causes acceleration motion (e.g., motion in an X, Y, and/or Z axis) and/or angular motion (e.g., azimuth, elevation, and/or roll motion) of the vehicle, an occupant of the vehicle (e.g., the eyes of an occupant of the vehicle), and/or the plurality of display devices. For example, a vehicle instability event may be an event that includes driving over a road that causes acceleration motion and/or angular motion of the vehicle, an occupant of the vehicle (e.g., the eyes of an occupant of the vehicle), and/or plurality of display devices. As another example, a vehicle instability event may be an event that includes encountering turbulence (e.g., when the vehicle is an aircraft) that causes acceleration motion and/or angular motion of the vehicle, an occupant of the vehicle (e.g., the eyes of an occupant of the vehicle), and/or plurality of display devices.

In some embodiments, the vehicle display stabilization device is configured to receive vehicle related motion data from the plurality of sensors. In this regard, in some embodiments, each of the plurality of sensors is configured to capture vehicle related motion data. For example, at least one camera component of the plurality of sensors may be configured to capture vehicle related motion data that is associated with an eye gaze of an occupant of the vehicle (e.g., acceleration motion and/or angular motion associated with an eye gaze of an occupant of the vehicle). As another example, a lidar component of the plurality of sensors may be configured to capture vehicle related motion data that is associated with an eye gaze of an occupant of the vehicle. As another example, an inertial measurement unit of the plurality of sensors may be configured to capture vehicle related motion data that is associated with motion of the vehicle (e.g., may be configured to capture vehicle related motion data that is associated the vehicle). In some embodiments, the vehicle display stabilization device is configured to correct for any drift associated with an inertial measurement unit. In some embodiments, the vehicle display stabilization device is configured to receive vehicle related motion data from the plurality of sensors when the vehicle is in motion (e.g., when the vehicle is travelling from a first location to a second location).

As shown in block 504, the method 500 includes identifying vehicle display configuration data. As described above, in some embodiments, vehicle display configuration data includes one or more items of data representative and/or indicative of a plurality of display configuration sets. In some embodiments, each of the plurality of display configuration sets is associated with a corresponding display device of the plurality of display devices. For example, a first display configuration set of the plurality of display configuration sets may be associated with the first display device of the plurality of display devices. As another example, a second display configuration set of the plurality of display configuration sets may be associated with the second display device of the plurality of display devices. As another example, a third display configuration set of the plurality of display configuration sets may be associated with the third display device of the plurality of display devices.

In some embodiments, a display configuration set includes an orientation display configuration item. In some embodiments, an orientation display configuration item indicates that a corresponding display device of the plurality of display devices is configured such that an interface component and/or interface provided on the corresponding display device is configured in a particular orientation (e.g., landscape, portrait, etc.). For example, when the first display configuration set includes an orientation display configuration item, the first display device may be configured such that the first vehicle interface component and/or the first interface are provided on the first display device in a particular orientation (e.g., landscape, portrait etc.).

In some embodiments, a display configuration set includes a layout display configuration item. In some embodiments, a layout display configuration item indicates that a corresponding display device of the plurality of display devices is configured such that an interface component and/or interface provided on the corresponding display device is configured in accordance with a particular layout (e.g., vehicle display items are configured on the interface component and/or interface in accordance with a particular layout). For example, when the second display configuration set includes a layout display configuration item, the second display device may be configured such that the second vehicle interface component and/or the second interface are provided on the second display device in a particular layout (e.g., a second portion of the plurality of vehicle display items are configured on the second vehicle interface component and/or the second interface in accordance with a particular layout).

In some embodiments, a display configuration set includes a dimension display configuration item. In some embodiments, a dimension display configuration item indicates that a corresponding display device of the plurality of display devices is configured such that an interface component and/or interface provided on the corresponding display device is configured in accordance with a particular dimension (e.g., vehicle display items are configured on the interface component and/or interface in accordance with a particular dimension). For example, when the third display configuration set includes a dimension display configuration item, the third display device may be configured such that the third vehicle interface component and/or the third interface are provided on the third display device in a particular dimension (e.g., a third portion of the plurality of vehicle display items are configured on the third vehicle interface component and/or the third interface in accordance with a particular dimension).

As shown in block 506, the method 500 includes generating vehicle display stabilization data by applying the vehicle related motion data to a vehicle display stabilization model. As described above, in some embodiments, vehicle display stabilization data includes one or more items of data representative and/or indicative of an estimated position change of an eye gaze of an occupant of the vehicle due to a vehicle instability event. Additionally, or alternatively, vehicle display stabilization data includes one or more items of data representative and/or indicative of an estimated position change of one or more of the plurality of display devices due to a vehicle instability event.

In some embodiments, the vehicle display stabilization device is configured to generate vehicle display stabilization data by applying vehicle related motion data to a vehicle display stabilization model. In some embodiments, a vehicle display stabilization model is a data entity that describes parameters, hyper-parameters, and/or defined operations of a rules-based and/or machine learning model that is configured to generate vehicle display stabilization data. In some embodiments, the vehicle display stabilization model includes a vestibulo-ocular reflex (VOR) model. In this regard, in some embodiments, the vehicle display stabilization model is configured to determine an estimated position change of an eye gaze of an occupant of the vehicle due to a vehicle instability event by using vehicle related motion data. Additionally, or alternatively, the vehicle display stabilization model is configured to determine an estimated position change of one or more of the plurality of display devices due to a vehicle instability event.

As shown in block 508, the method 500 includes generating a plurality of stabilized vehicle interface components based on the vehicle display stabilization data, vehicle display data, and the vehicle display configuration data. As described above, in some embodiments, the vehicle display stabilization device may be configured to generate a first stabilized vehicle interface component. As another example, the vehicle display stabilization device may be configured to generate a second stabilized vehicle interface component. As another example, the vehicle display stabilization device may be configured to generate a third stabilized vehicle interface component.

In some embodiments, the plurality of stabilized vehicle interface components is generated based on vehicle display stabilization data and/or vehicle display data. In this regard, in some embodiments, each of the plurality of stabilized vehicle interface components includes at least a portion of a plurality of stabilized vehicle display items that correspond to the plurality of vehicle display items. For example, the first stabilized vehicle interface component may include a first portion of the plurality of stabilized vehicle display items that correspond to the first portion of the plurality of vehicle display items. As another example, the second stabilized vehicle interface component may include a second portion of the plurality of stabilized vehicle display items that correspond to the second portion of the plurality of vehicle display items. As another example, the third stabilized vehicle interface component may include a third portion of the plurality of stabilized vehicle display items that correspond to the third portion of the plurality of vehicle display items.

Additionally, or alternatively, the plurality of stabilized vehicle interface components is generated based on vehicle display configuration data. In this regard, in some embodiments, each of the plurality of stabilized vehicle interface components may be generated in accordance with an orientation display configuration item. For example, the first stabilized vehicle interface component may be generated such that it is in accordance with an orientation display configuration item associated with the first display device. In some embodiments, each of the plurality of stabilized vehicle interface components may be generated in accordance with a layout display configuration item. For example, the second stabilized vehicle interface component may be generated such that it is in accordance with a layout display configuration item associated with the second display device. In some embodiments, each of the plurality of stabilized vehicle interface components may be generated in accordance with a dimension display configuration item. For example, the third stabilized vehicle interface component may be generated such that it is in accordance with a dimension display configuration item associated with the third display device.

In some embodiments, each of the plurality of stabilized vehicle display items is associated with a stabilized display item position on one of the plurality of stabilized vehicle interface components. In this regard, for example, a stabilized display item position may be a position on one of the plurality of stabilized vehicle interface components at which a stabilized vehicle related device display item is displayed and/or located. For example, the first portion of the plurality of stabilized vehicle display items may be associated with a first stabilized display item position on the first stabilized vehicle interface component. As another example, the second portion of the plurality of stabilized vehicle display items may be associated with a second stabilized display item position on the second stabilized vehicle interface component. As another example, the third portion of the plurality of stabilized vehicle display items may be associated with a third stabilized display item position on the third stabilized vehicle interface component. In some embodiments, a stabilized display item position may be a different position that an original display item position. Said differently, in some embodiments, each of the plurality of stabilized vehicle interface components is configured such that an estimated position change of an eye gaze of an occupant of the vehicle and/or an estimated position change of the plurality of display devices due to a vehicle instability event is accounted for when displaying display items.

As shown in block 510, the method 500 includes causing each of the plurality of stabilized vehicle interface components to be rendered to an interface of a corresponding display device. As described above, in some embodiments, the vehicle display stabilization device may be configured to cause the first stabilized vehicle interface component to be rendered to a first interface. As another example, the vehicle display stabilization device may be configured to cause the second stabilized vehicle interface component to be rendered to a second interface. As another example, the vehicle display stabilization device may be configured to cause the third stabilized vehicle interface component to be rendered to a third interface.

As shown in optional block 512, the method 500 optionally includes remapping one or more touch zones based on the vehicle display stabilization data. As described above, in some embodiments, each of the plurality of stabilized vehicle interface components includes one or more remapped touch zones. For example, the first stabilized vehicle interface component may include one or more first remapped touch zones. As another example, the second stabilized vehicle interface component may include one or more second remapped touch zones. As another example, the third stabilized vehicle interface component may include one or more third remapped touch zones. In this regard, in some embodiments, the vehicle display stabilization device is configured to remap the one or more touch zones based on the vehicle display stabilization data.

In some embodiments, each of the one or more remapped touch zones is associated with a remapped touch zone position on one of the plurality of stabilized vehicle interface components. In this regard, for example, a remapped touch zone position may be a position on one of the plurality of stabilized vehicle interface components at which a remapped touch zone is displayed and/or located. For example, the one or more first remapped touch zones may be associated with a first remapped touch zone position on the first stabilized vehicle interface component. As another example, the one or more second remapped touch zones may be associated with a second remapped touch zone position on the second stabilized vehicle interface component. As another example, the one or more third remapped touch zones may be associated with a third remapped touch zone position on the third stabilized vehicle interface component.

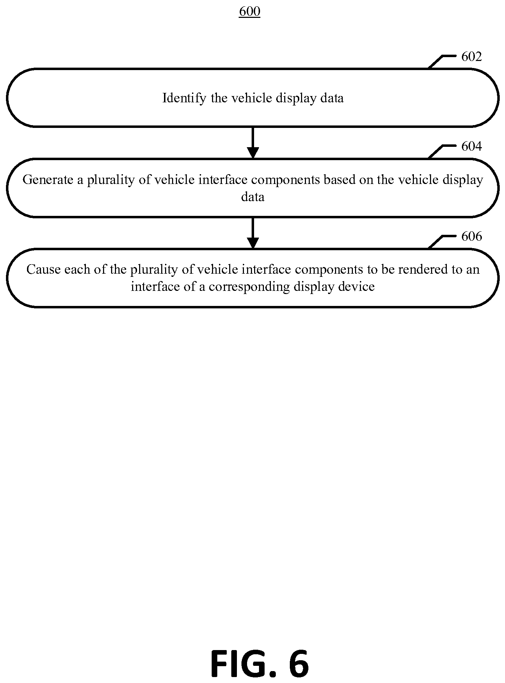

Referring now to FIG. 6, a flowchart providing an example method 600 is illustrated. In this regard, FIG. 6 illustrates operations that may be performed by the vehicle display stabilization device 180. In some embodiments, the method 600 includes operations for generating a plurality of vehicle interface components, as described above. In some embodiments, the example method 600 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 600.

As shown in block 602, the method 600 includes identifying the vehicle display data. As described above, in some embodiments, vehicle display data includes one or more items of data representative and/or indicative of a plurality of vehicle display items. In some embodiments, a display item is an item that is configured to be displayed on an interface component to convey and/or indicate information. For example, a display item may include images (e.g., still images), videos, synthetic images, virtual reality images, extended reality images, augmented reality images, and/or the like. In this regard, in some embodiments, a vehicle display item is a display item that is indicative of a speed associated with the vehicle. For example, a vehicle display item may be a display item that indicates a speed at which the vehicle is moving. In some embodiments, a vehicle display item is a display item that is indicative of a fuel quantity associated with the vehicle. For example, a vehicle display item may be a display item that indicates an amount of fuel in the vehicle. In some embodiments, a vehicle display item is a display item that is indicative of engine parameters associated with the vehicle. For example, a vehicle display item may be a display item that indicates an engine temperature of an engine of the vehicle.

In some embodiments, a vehicle display item is a display item that is indicative of navigation maps associated with the vehicle. For example, a vehicle display item may be a display item that indicates a map of the area surrounding the vehicle. As another example, a vehicle display item may be a display item that indicates a flight path of the vehicle (e.g., when the vehicle is an aircraft). In some embodiments, a vehicle display item is a display item that is indicative of audio controls associated with the vehicle. For example, a vehicle display item may be a display item that may be used to adjust an audio volume in the vehicle. In some embodiments, a vehicle display item is a display item that is indicative of display controls associated with the vehicle. For example, a vehicle display item may be a display item that may be used to adjust a brightness of a display device in the vehicle. In some embodiments, a vehicle display item is a display item that is indicative of turbulence associated with the vehicle. For example, a vehicle display item may be a display item that indicates current and/or predicted turbulence associated with the vehicle (e.g., when the vehicle is an aircraft). In some embodiments, a vehicle display item is a display item that is indicative of weather associated with the vehicle. For example, a vehicle display item may be a display item that indicates severe weather in an area surrounding the vehicle. In some embodiments, the plurality of vehicle display items is associated with a plurality of vehicle interface components. In some embodiments, a first portion of the plurality of vehicle display items is associated with a first vehicle interface component of the plurality of vehicle interface components. In some embodiments, a second portion of the plurality of vehicle display items is associated with a second vehicle interface component of the plurality of vehicle interface components. In some embodiments, a third portion of the plurality of vehicle display items is associated with a third vehicle interface component of the plurality of vehicle interface components. Said differently, for example, the plurality of vehicle display items may be configured such that a portion of the plurality of vehicle display items may be displayed on one of the plurality of vehicle interface components.

As shown in block 604, the method 600 includes generating a plurality of vehicle interface components based on the vehicle display data. As described above, in some embodiments, the plurality of vehicle interface components is generated based on vehicle display data. In this regard, in some embodiments, each of the plurality of vehicle interface components includes at least one of the plurality of vehicle display items (e.g., at least one of the plurality of vehicle display items is included on each of the plurality of vehicle interface components). In some embodiments, each of the plurality of vehicle display items is associated with an original display item position on one of the plurality of vehicle interface components. In this regard, for example, an original display item position may be a position on each of the plurality of vehicle interface components at which a vehicle related device display item is displayed and/or located. For example, the first portion of the plurality of vehicle display items may be associated with a first original display item position on the first vehicle interface component. As another example, the second portion of the plurality of vehicle display items may be associated with a second original display item position on the second vehicle interface component. As another example, the third portion of the plurality of vehicle display items may be associated with a third original display item position on the third vehicle interface component. Although FIG. 3 illustrates three vehicle interface components in the plurality of vehicle interface components, it would be understood by one skilled in the field to which this disclosure pertains that the plurality of vehicle interface components may include more or less vehicle interface components. For example, the plurality of vehicle interface components may include four or two vehicle interface components.

In some embodiments, each of the plurality of vehicle interface components includes one or more touch zones. For example, the first vehicle interface component may include one or more first touch zones. As another example, the second vehicle interface component may include one or more second touch zones. As another example, the third vehicle interface component may include one or more third touch zones. In some embodiments, each of the one or more touch zones are selectable portions of the plurality of vehicle interface components. For example, the one or more touch zones may be selectable to display information about a vehicle display item. As another example, the one or more touch zones may be selectable to control one or more functions of the vehicle.

In some embodiments, each of the one or more touch zones is associated with an original touch zone position on one of the plurality of vehicle interface components. In this regard, for example, an original touch zone position may be a position on each of the plurality of vehicle interface components at which a touch zone is displayed and/or located on each of the plurality of vehicle interface components. For example, the one or more first touch zones may be associated with a first original touch zone position on the first vehicle interface component. As another example, the one or more second touch zones may be associated with a second original touch zone position on the second vehicle interface component. As another example, the one or more third touch zones may be associated with a third original touch zone position on the third vehicle interface component.

As shown in block 606, the method 600 includes causing each of the plurality of vehicle interface components to be rendered to an interface of a corresponding display device. As described above, in some embodiments, the vehicle display stabilization device may be configured to cause the first vehicle interface component to be rendered to a first interface. As another example, the vehicle display stabilization device may be configured to cause the second vehicle interface component to be rendered to a second interface. As another example, the vehicle display stabilization device may be configured to cause the third vehicle interface component to be rendered to a third interface.

In some embodiments, each of the plurality of interfaces may be provided on one of the plurality of display devices. For example, the first interface may be provided on a first display device of the plurality of display devices. As another example, the second interface may be provided on a second display device of the plurality of display devices. As another example, the third interface may be provided on a third display device of the plurality of display devices.

In some embodiments, each of the plurality of interfaces may be provided on one of the plurality of display devices. For example, the first interface may be provided on a first display device of the plurality of display devices. As another example, the second interface may be provided on a second display device of the plurality of display devices. As another example, the third interface may be provided on a third display device of the plurality of display devices.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

While this specification contains many specific embodiment and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. A method comprising:
receiving, from a plurality of sensors of a vehicle, vehicle related motion data;
identifying vehicle display configuration data, wherein the vehicle display configuration data is representative of a plurality of display configuration sets, wherein each of the plurality of display configuration sets is associated with a corresponding display device of a plurality of display devices of the vehicle;
generating vehicle display stabilization data by applying the vehicle related motion data to a vehicle display stabilization model;
generating a plurality of stabilized vehicle interface components based on the vehicle display stabilization data, vehicle display data, and the vehicle display configuration data, wherein each of the plurality of stabilized vehicle interface components is associated with a corresponding display device of the plurality of display devices of the vehicle; and
causing each of the plurality of stabilized vehicle interface components to be rendered to an interface of a corresponding display device.

2. The method of claim 1, wherein the vehicle related motion data is received when the vehicle is in motion.

3. The method of claim 1, wherein the plurality of sensors includes at least one camera.

4. The method of claim 3, wherein the at least one camera is configured to capture vehicle related motion data associated with an eye gaze of an occupant of the vehicle.

5. The method of claim 3, wherein the at least one camera is positioned inside an interior area of the vehicle.

6. The method of claim 1, wherein the plurality of sensors includes at least one lidar device.

7. The method of claim 1, wherein the plurality of sensors includes at least one inertial measurement unit.

8. The method of claim 1, wherein each of the plurality of display devices is physically secured to the vehicle.

9. The method of claim 1, wherein each of the plurality of display configuration sets is representative of one or more of an orientation display configuration item, a layout display configuration item, or a dimension display configuration item.

10. The method of claim 1, further comprising:
remapping one or more touch zones based on the vehicle display stabilization data.

11. The method of claim 1, further comprising:
identifying the vehicle display data;
generating a plurality of vehicle interface components based on the vehicle display data, wherein each of the plurality of vehicle interface components is associated with a corresponding display device of the plurality of display devices of the vehicle; and
causing each of the plurality of vehicle interface components to be rendered to an interface of a corresponding display device.

12. The method of claim 1, wherein the vehicle related motion data is received in response to a vehicle instability event.

13. The method of claim 1, wherein each of the plurality of display devices is physically separate from each of the plurality of sensors.

14. An apparatus comprising memory and one or more processors communicatively coupled to the memory, the one or more processors configured to:
receive, from a plurality of sensors of a vehicle, vehicle related motion data;
identify vehicle display configuration data, wherein the vehicle display configuration data is representative of a plurality of display configuration sets, wherein each of the plurality of display configuration sets is associated with a corresponding display device of a plurality of display devices of the vehicle;
generate vehicle display stabilization data by applying the vehicle related motion data to a vehicle display stabilization model;
generate a plurality of stabilized vehicle interface components based on the vehicle display stabilization data, vehicle display data, and the vehicle display configuration data, wherein each of the plurality of stabilized vehicle interface components is associated with a corresponding display device of the plurality of display devices of the vehicle; and
cause each of the plurality of stabilized vehicle interface components to be rendered to an interface of a corresponding display device.

15. A computer program product comprising at least one non-transitory computer-readable storage medium having computer program code stored thereon that, in execution with at least one processor, configures the computer program product for:
receiving, from a plurality of sensors of a vehicle, vehicle related motion data;
identifying vehicle display configuration data, wherein the vehicle display configuration data is representative of a plurality of display configuration sets, wherein each of the plurality of display configuration sets is associated with a corresponding display device of a plurality of display devices of the vehicle;
generating vehicle display stabilization data by applying the vehicle related motion data to a vehicle display stabilization model;
generating a plurality of stabilized vehicle interface components based on the vehicle display stabilization data, vehicle display data, and the vehicle display configuration data, wherein each of the plurality of stabilized vehicle interface components is associated with a corresponding display device of the plurality of display devices of the vehicle; and
causing each of the plurality of stabilized vehicle interface components to be rendered to an interface of a corresponding display device.
